# EUROPEAN PATENT SPECIFICATION

(11) **EP 1 895 182 B1**
(45) Date of publication and mention of the grant of the patent: **03.11.2010**
(21) Application number: 06119944.4
(22) Date of filing: 31.08.2006
(51) Int. Cl.: F16D 21/06, F16D 25/10, F16D 25/0638

(54) **Power transmission apparatus with dual clutch**
Leistungsübertragungsvorrichtung mit Doppelkupplung
Dispositif de transmission de puissance avec embrayage double

(43) Date of publication of application: 05.03.2008
(73) Proprietor: KABUSHIKI KAISHA F.C.C., Shizuoka Shizuoka-ken (JP)
(72) Inventor: Katsuaki, Mori Kabushiki Kaisha F.C.C., Shizuoka-ken Shizuoka (JP); Yukio, Nishide Kabushiki Kaisha F.C.C., Shizuoka-ken Shizuoka (JP); Masaaki, Kobayashi Kabushiki Kaisha F.C.C., Shizuoka-ken Shizuoka (JP)
(74) Representative: Cohausz & Florack

(56) References cited:
- DE-A1- 3 508 375
- DE-A1- 10 146 837
- US-A- 3 566 707
- US-A1- 2003 066 728
- US-A1- 2005 252 749

## Description

### BACKGROUND OF THE INVENTION

### Field of the Invention

The present invention relates to a power transmission apparatus provided with two clutch sections comprising first and second clutch sections.

### Description of Background Art

The power transmission apparatus for selectively connecting and cutting the driving force (output) of engine to wheels of vehicle includes a manual transmission (MT) and an automatic transmission (AT) using e.g. a torque converter. Although the AT is easy for shifting operation, it has a disadvantage of less response, on the other hand, the MT has a disadvantage of large shock in speed change although it has a good response.

In view of points of reducing the shock in speed change and of improving the response, it has been developed a power transmission apparatus provided with a plurality of clutch sections (see European Patent Publication No. 1195537 Specification). Such a power transmission apparatus of the prior art comprises an input member rotated by the output of engine, two clutch sections of multi-disc type, transmission members extending from the outside of the two clutch sections and connected to output shafts, and a selecting means controlled by hydraulics for pressing and separating a plurality of clutch discs of each clutch section.

In such a power transmission apparatus, it is possible to carry out the speed change operation (speed change by a transmission of vehicle) corresponding to its output shaft with the driving force of the input shaft being selectively transmitted via the transmission member corresponding to the clutch section when any one of the clutch sections is selectively actuated. Such a power transmission apparatus can perform the automatic switching control of the clutch sections in accordance with velocity of vehicle and also perform the automatic speed change operation without causing a conspicuous shock in speed change.

Moreover, a power transmission device is known from DE 101 46 837 A1. Said power transmission device comprises an input element driven by an engine; an output element carrying several clutch disks; and two clutch sections, each of the clutch sections being connected to one of two separate, co-axially supported hollow shafts that transfer the power via two shafts into a gearbox. One of the embodiments shows a single spring mounted between the two clutch sections and compressing the clutch disks of both clutch sections. The clutch disks of both clutch sections can be released independently by means of pistons that push the spring back from either the first or the second clutch section via tubes and disks.

### Disclosure of the Invention

### Problems to be solved by the Invention

However, in the power transmission apparatus of the prior art, since the transmission members extend from radially outside of two clutch sections and are connected to the output shafts arranged at the center of the apparatus, the transmission members are arranged so that they cover the clutch sections and the selecting means etc. Thus the heat radiation from the clutch sections, selecting members etc. tends to be obstructed. In addition, since one transmission member is formed so that it covers the other transmission member, the size of the clutch discs (driving clutch discs and driven clutch discs) in the clutch sections is differentiated. This makes it difficult to use common parts in the apparatus. Furthermore, since the input means extends from radially outward to radially inward of the power transmission apparatus to form a power transmission path, the structure including the selecting means becomes complicated.

### SUMMARY OF THE INVENTION

It is, therefore, an object of the present invention to provide a power transmission apparatus having a structure improving heat radiation, clutch discs of same configuration in two clutch sections enabling common use in them, and a simple structure having a simple power transmission path.

### Means for solving the problems

According to the present invention of claim 1, there is provided a power transmission apparatus comprising an input member rotated by engine output; first and second clutch sections respectively having a plurality of driving clutch discs and a plurality of driven clutch discs each driving and driven clutch discs being alternately arranged; first and second output shafts rotated by driving force transmitted from the first and second clutch sections; transmission members for transmitting the driving force transmitted from the first and second clutch sections respectively to the first and second output shafts; and selecting means for selectively pressing or separating the driving clutch discs and driven clutch discs respectively of the first and second clutch sections each other; the first and second output shafts extending substantially in parallel with each other radially inside the input member and selectively transmitting the driving force from the input member to the first and second output shafts in accordance of the pressing or separating operation by the selecting means against the driving clutch discs and the driven clutch discs of the first and second clutch sections, wherein the first and second clutch sections are arranged axially in parallel with the first and second shafts **characterized in that**, the transmission members extend from either side of a group of the first and second clutch sections to the first and second output shafts such that said transmission members extend from opposing sides of said first and second clutch sections, that the selecting means is arranged between the transmission members.

According to the present invention of claim 2, there is provided a power transmission apparatus of claim 1 wherein oil passages for supplying actuating oil to the selecting means are arranged radially inward from said selecting means.

According to the present invention of claim 3, there is provided a power transmission apparatus of claim 1 or claim 2 wherein the group of the first and second clutch sections are at least partially laid open to the atmosphere in order to improve the heat radiation.

According to the present invention of claim 4, there is provided a power transmission apparatus of any of claims 1-3 wherein the selecting means comprises first and second pressing members for pressing the driving clutch discs and the driven clutch discs of the first and second clutch sections each other; a central wall; and urging means for urging the first and second pressing members toward the central wall; and wherein the driving clutch discs and the driven clutch discs of the first and second clutch sections are pressed each other by axially sliding the first and second pressing members against the urging force of the urging means with introducing actuating oil into spaces between the central wall and the first pressing member or the second pressing member.

### Effects of the Invention

According to the invention of claim 1, since the transmission members extend from the first and second output shafts at either side of a group of the first and second clutch sections, it is possible to lay open the radially outer portions e.g. the first and second clutch sections etc. to improve the heat radiation therefrom and also possible to arrange clutch discs of same configuration in two clutch sections and thus enable common use of the clutch disc in two clutch sections. In addition, since the driving force can be transmitted from the input means of radially outward to the output shafts of radially inward, it is possible to have a simple structure by simplifying the power transmitting path. Furthermore, since the transmission members extend from either side of a group of the first and second clutch sections to the first and second output shafts, and the selecting means is arranged between the transmission members, it is possible to further simplify the structure of the apparatus and also possible to improve assembling efficiency by previously integrating the selecting means between the first and second clutch sections.

According to the invention of claim 4, since the driving clutch discs and the driven clutch discs of the first and second clutch sections are pressed each other by axially sliding the first and second pressing members against the urging force of the urging means with introducing actuating oil into spaces between the central wall and the first pressing member or the second pressing member, it is possible to form a wall bearing the pressure of actuating oil by only one central wall and thus to simplify the structure of the selecting means.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal section view of a power transmission apparatus of a preferable embodiment of the present invention, and
Fig. 2 is a partially broken away perspective view of the power transmission apparatus of Fig. 1.

### DESCRIPTION OF THE PREFERRED EMBODIMENTS

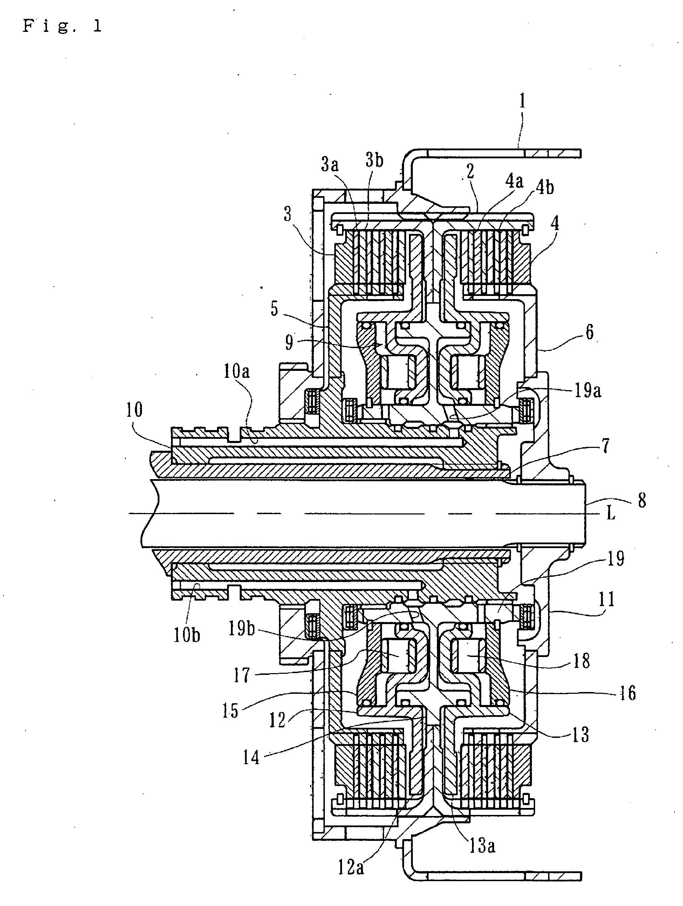

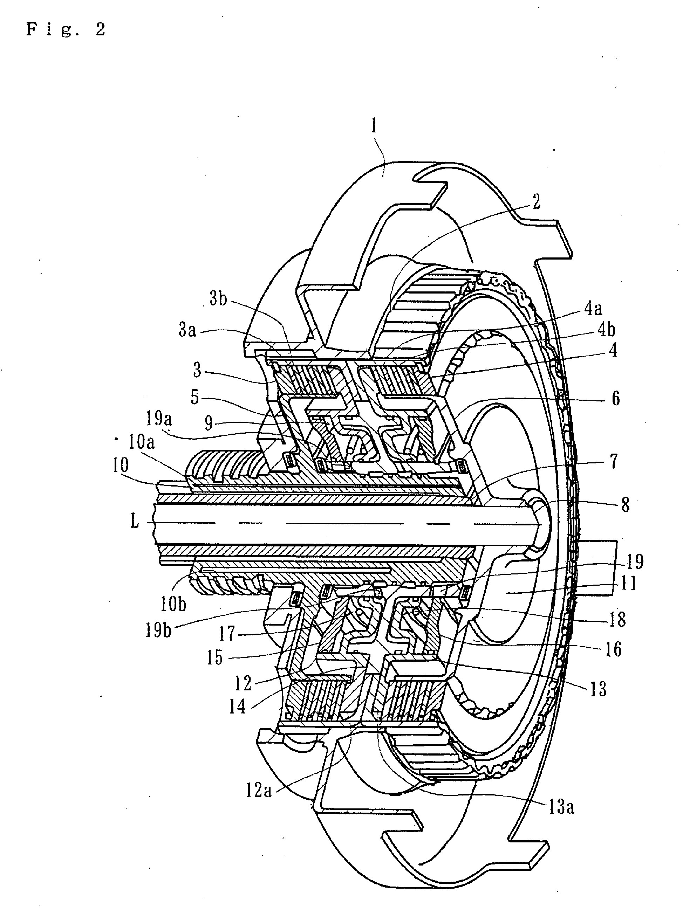

One preferable embodiment of the present invention will be described with reference to drawings.
A power transmission apparatus of the preferable embodiment is a combination of a vehicle starting clutch and a speed change clutch used for transmitting a driving force (output) of an engine of vehicle to its driving wheels. As shown in Figs. 1 and 2, the power transmission apparatus comprises a driving plate 1 and a guiding plate 2 forming an input member, a first clutch section 3 having a driving clutch discs 3a and driven clutch discs 3b, a second clutch section 4 having a driving clutch discs 4a and driven clutch discs 4b, transmission members 5, 6, a first output shaft 7, a second output shaft 8, a selecting means 9, and interlocking members 10, 11.

The driving plate 1 and the guiding plate 2 are integrally connected each other via tooth fitting or welding and can be rotated by a driving force of an engine (not shown) of vehicle around a longitudinal axis "L". Radially inside of the guiding, the plurality of driving clutch discs 3a, 4a respectively of the first clutch section 3 and the second clutch section 4 are arranged so that they can slide in the right and left direction along the axis "L".

Radially outside of the transmission member 5, 6, the plurality of driven clutch discs 3b, 4b respectively of the first clutch section 3 and the second clutch section 4 are arranged so that they can slide in the right and left direction along the axis "L". The driving clutch discs 3a, (4a) and the driven clutch discs 3b, (4b) are alternately arranged each other in a laminated fashion. Accordingly mutually adjacent driving clutch discs 3a, (4a) and the driven clutch discs 3b, (4b) can be pressed and separated each other. In this specification, the term "separate" means not only a physical separation but a substantial separation i.e. a condition released from the pressed condition. That is, the driving force of the guiding plate 2 can be transmitted to the transmission member 5 or 6 in the pressed condition, on the other hand, transmission, of the driving force of the guiding plate 2 cannot be transmitted to the transmission member 5 or 6 in the separated condition.

The first clutch section 3 having the driving clutch discs 3a and driven clutch discs 3b and the second clutch section 4 having driving clutch discs 4a and driven clutch discs 4b are arranged along the axis "L" of the first and second output shafts 7, 8. The transmission members 5, 6 extend radially outwardly from the first and second output shafts 7, 8 at either side of a group of the first and second clutch sections.

That is, as shown in Fig. 1, the transmission member 5 extends from the left end of the first clutch section 3 toward radially inward and the transmission member 6 extends from the right end of the second clutch section 4 toward radially inward. In addition, the radially innermost end of the transmission member 5 is connected to the interlocking member 10 rotatable around the axis "L" interlocking with the transmission member 5. On the other hand, the radially innermost end of the transmission member 6 is connected to the interlocking member 11 rotatable around the axis "L" interlocking with the transmission member 6. The interlocking member 10 is formed with oil passages 10a, 10b for supplying actuating oil to the selecting means 9.

The first output shaft 7 comprises a cylindrical member extending along the axis "L" within which the second output shaft 8 of solid cylindrical member is contained. The first output shaft 7 and the second output shaft 8 are adapted to be independently rotated each other and the first and second output shafts 7, 8 are spline-fitted respectively to the interlocking members 10, 11. Accordingly, the rotational force of the transmission member 5 is transmitted to the first output shaft 7 via the interlocking member 10 and the rotational force of the transmission member 6 is similarly transmitted to the second output shaft 8 via the interlocking member 11.

The selecting means 9 is arranged between the transmission members 5, 6 and has a function of selectively pressing or separating the driving clutch discs 3a, 4a and the driving clutch discs 3b, 4b of the first and section clutch sections 3, 4. The selecting means 9 comprises mainly a first pressing member 12, a second pressing member 13, a central wall 14, side walls 15, 16, leaf springs 17,18 forming urging means, and a guiding member 19.

The first pressing member 12 has a pressing portion 12a arranged near the right end of the first clutch section 3 and is adapted to be slid in a left/right direction along the axis "L" guided by the guiding member 19 and the radially outermost end of the side wall 15 so as to press or separate the driving clutch discs 3a and the driven clutch discs 3b of the first clutch section 4. That is, the driving and driven clutch discs 3a, 3b are pressed each other by the pressing portion 12a when the first pressing member 12 slides toward the left direction, on the contrary, the driving and driven clutch discs 3a, 3b are released from the pressed condition when the first pressing member 12 slides toward the right direction,

Similarly, the second pressing member 13 has a pressing portion 13a arranged near the left end of the second clutch section 4 and is adapted to be slid in a left/right direction along the axis "L" guided by the guiding member 19 and the radially outermost end of the side wall 16 so as to press or separate the driving clutch discs 4a and the driven clutch discs 4b of the second clutch section 4. The central wall 14 is positioned between the first and second pressing members 12, 13 and separates the sliding space (actuating chamber) of the first pressing member 12 and the sliding space (actuating chamber) of the second pressing member 13 from each other.

The leaf springs 17, 18 are arranged respectively between the first pressing member 12 and the side wall 15 and between the second pressing member 13 and the side wall 16 so as to urge the first and second pressing members 12,13 toward the central wall 14. The guiding member 19 is formed with an oil passages 19a, 19b respectively communicating with the oil passages 10a, 10b of the interlocking members 10, 11.

When the actuating oil is supplied to the oil passage 10a, the actuating oil will flows into the actuating chamber (between the central wall 14 and the first pressing member 12) of the first pressing member 12. Thus the first pressing member 12 is slid by the actuating oil toward the left direction against the urging force of the leaf spring 17 to press the driving clutch discs 3a and the driven clutch discs 3b of the first clutch section 3 each other. When the supply of the actuating oil is stopped, the first pressing member 12 will be returned to its original position by the urging force of the leaf spring 17 and thus the pressurized contact between the driving clutch discs 3a and the driven clutch discs 3b is released.

Similarly, when the actuating oil is supplied to the oil passage 10b, the actuating oil will flows into the actuating chamber (between the central wall 14 and the second pressing member 13) of the first pressing member 13. Thus the second pressing member 13 is slid by the actuating oil toward the right direction against the urging force of the leaf spring 18 to press the driving clutch discs 4a and the driven clutch discs 4b of the second clutch section 4 each other. When the supply of the actuating oil is stopped, the second pressing member 13 will be returned to its original position by the urging force of the leaf spring 18 and thus the pressurized contact between the driving clutch discs 4a and the driven clutch discs 4b is released.

Accordingly, the first clutch section 3 and the second clutch section 4 can be selectively actuated (i.e. connect and disconnect of the driving force) at any timing by selectively supplying the actuating oil to either one of the oil passages 10a or 10b. That is, the driving force (output) of an engine inputted to the driving plate 1. and the guiding plate 2 is transmitted to the transmission member 5 and the interlocking member 10 via the first clutch section 3 and rotates the first output shaft 7 by supplying the actuating oil to the oil passage 10a. On the other hand, the driving force (output) of an engine inputted to the driving plate 1 and the guiding plate 2 is transmitted to the transmission member 6 and the interlocking member 11 via the second clutch section 4 and rotates the second output shaft 8 by supplying the actuating oil to the oil passage 10b. Accordingly the driving force of an engine can be selectively transmitted to either one of the first and second output shafts 7, 8.

The first output shaft 7 and the second output shaft 8 can be connected respectively to even number stages and odd number stages of a transmission of a vehicle so as to perform a smooth speed change by connecting one output shaft to one stage (output path in the transmission) while power transmission is carried out via the other output shaft. Thus the power transmission apparatus of the present invention can perform the automatic switching control of the clutch sections (i.e. selective supply of actuating oil to either one of the oil passages 10a, 10b) in accordance with velocity of vehicle to achieve the automatic speed change operation without causing conspicuous shock of speed change.

According to the preferred embodiment of the present invention, since the transmission members 5, 6 extend from the radially inside of the clutch group (first clutch section 3 and second clutch section 4) to the first and second output shafts 7, 8 at either side of the clutch group, it is possible to open the radially outer portion (i.e. portion of driving and driven clutch discs 3a, 4a; 3b, 4b) of the clutch group to atmosphere and thus to improve the heat radiation. That is, the power transmission apparatus can achieve a remarkably improved heat radiation as compared with a power transmission apparatus of the prior art in which the transmission members extend from radially outward position of the clutch group to the output shafts in such a manner as they cover the clutch group.

From the structure of the power transmission apparatus described above, it is possible to use clutch discs (driving clutch discs 3a, 4a and driven clutch discs 3b, 4b) of the first and second clutch members 3, 4 having substantially same configuration (especially the diameter of clutch discs) and thus to enable common use of the clutch discs in two clutch sections. Accordingly it is possible to achieve easy administration of parts in manufacturing steps and thus to reduce the manufacturing cost.

In addition, since the driving force can be transmitted from the input means of radially outward to the output shafts of radially inward, it is possible to have a simple structure by simplifying the power transmitting path. Furthermore, since the transmission members 5, 6extend from either side of a group of the first and second clutch sections to the first and second output shafts 7, 8, and the selecting means 9 is arranged between the transmission members 5, 6, it is possible to further simplify the structure of the apparatus and also possible to improve assembling efficiency by previously integrating the selecting means between the first and second clutch sections.

According to the preferred embodiment of the invention, since the driving clutch discs 3a, 4a and the driven clutch discs 3b, 4b of the first and second clutch sections 3, 4 are pressed each other by axially sliding the first and second pressing members 12, 13 against the urging force of the urging means with introducing actuating oil into spaces between the central wall 14 and the first pressing member 12 or the second pressing member 13, it is possible to form a wall bearing the pressure of actuating oil by only one central wall 14 and thus to simplify the structure of the selecting means 9.

The present invention has been described with reference to the preferred embodiment. Obviously, modifications and alternations will occur to those of ordinary skill in the art upon reading and understanding the preceding detailed description. For example, it is possible to replace the selecting means 9 actuated by oil with other means which can selectively press and separate the driving clutch discs 3a, 4a and driven clutch discs 3b, 4b of the first and second clutch sections 3, 4. In addition it is possible to replace the leaf springs 17, 18 in the selecting means 9 with other means for urging the first and second pressing members 12, 13 toward the central wall 14.

### Applicability to industries

The power transmission apparatus can be applied to those having differences in configurations of external appearance and structural parts and those having additional functions, if they have features in that the first and second clutch sections are arranged axially in parallel with the first and second shafts, that the transmission members extend from either side of a group of the first and second clutch sections to the first and second output shafts, and that the selecting means is arranged between the transmission members.

## Claims

1. A power transmission apparatus comprising an input member (1, 2) rotated by engine output; first and second clutch sections (3, 4) respectively having a plurality of driving clutch discs (3a, 4a) and a plurality of driven clutch discs (3b, 4b) each driving and driven clutch discs (3a, 4a; 3b, 4b) being alternately arranged; first and second output shafts (7, 8) rotated by driving force transmitted from the first and second clutch sections (3, 4); transmission members (5, 6) for transmitting the driving force transmitted from the first and second clutch sections (3, 4) respectively to the first and second output shafts (7, 8); and selecting means (9) for selectively pressing or separating the driving clutch discs (3a, 4a) and driven clutch discs (3b, 4b) respectively of the first and second clutch sections (3, 4) each other; the first and second output shafts (7, 8) extending substantially in parallel with each other radially inside the input member (1, 2) and selectively transmitting the driving force from the input member (1, 2) to the first and second output shafts (7, 8) in accordance of the pressing or separating operation by the selecting means (9) against the driving clutch discs (3a, 4a) and the driven clutch discs (3b, 4b) of the first and second clutch sections (3, 4), wherein the first and second clutch sections (3, 4) are arranged axially in parallel with the first and second shafts (7, 8) **characterized in:**
**that** the transmission members (5, 6) extend from either side of a group of the first and second clutch sections (3, 4) to the first and second output shafts (7, 8) such that said transmission members (5, 6) extend from opposing sides of said first and second clutch sections (3, 4), that the selecting means (9) is arranged between the transmission members (5, 6).

2. A power transmission apparatus of claim 1 wherein oil passages (10a, lOb) for supplying actuating oil to the selecting means (9) are arranged radially inward from said selecting means (9).

3. A power transmission apparatus of claim 1 or claim 2 wherein the group of the first and second clutch sections (3, 4) are at least partially laid open to the atmosphere in order to improve the heat radiation.

4. A power transmission apparatus of any one of claims 1-3 wherein the selecting means (9) comprises first and second pressing members (12, 13) for pressing the driving clutch discs (3a, 4a) and the driven clutch discs (3b, 4b) of the first and second clutch sections (3, 4) each other; a central wall (14); and urging means (17, 18) for urging the first and second pressing members (12,13) toward the central wall (14); and wherein the driving clutch discs (3a, 4a) and the driven clutch discs (3b, 4b) of the first and second clutch sections (3, 4) are pressed each other by axially sliding the first and second pressing members (12, 13) against the urging force of the urging means (17, 18) with introducing actuating oil into spaces between the central wall (14) and the first pressing member (12) or the second pressing member (13).

5. A power transmission apparatus of claim 4 wherein further comprising a guiding member (19) and side walls (15, 16) forming an actuating chamber for sliding the first and second pressing members (12, 13); and wherein the first and second pressing members (12, 13) are guided by the guiding member (19) and end faces of the side walls (15, 16).

6. A power transmission apparatus of claim 4 or 5 wherein the urging means (17, 18) comprises a leaf spring.

7. A power transmission apparatus any one of claims 4 ∼ 6 wherein each of the urging means (17, 18) is arranged between the first pressing member (12) and the side wall (15) and between the second pressing member (13) and the side wall (16) so as to urge the first and second pressing members (12, 13) toward the central wall (14).

8. A power transmission apparatus any one of claims 1 ∼ 7 wherein the first output shaft (7) and the second output shaft (8) are connected respectively to even number stages and odd number stages of a transmission of a vehicle.

## Patentansprüche

1. Leistungsübertragungsvorrichtung, die ein Antriebselement (1, 2), das durch die Motorleistung gedreht wird, eine erste und eine zweite Kupplungssektion (3, 4), die jeweils mehrere Antriebskupplungsscheiben (3a, 4a) und mehrere Abtriebskupplungsscheiben (3b, 4b) aufweisen, wobei die Antriebs- und die Abtriebskupplungsscheiben (3a, 4a; 3b, 4b) jeweils abwechselnd angeordnet sind, eine erste und eine zweite Abtriebswelle (7, 8), die durch die von der ersten und der zweiten Kupplungssektion (3, 4) übertragene Antriebskraft gedreht werden, Übertragungselemente (5, 6), um die von der ersten und der zweiten Kupplungssektion (3, 4) übertragene Antriebskraft jeweils zu der ersten und der zweiten Abtriebswelle (7, 8) zu übertragen, und Auswahlmittel (9), um selektiv die Antriebskupplungsscheiben (3a, 4a) und die Abtriebskupplungsscheiben (3b, 4b) der ersten und der zweiten Kupplungssektion (3, 4) jeweils aneinanderzupressen oder voneinander zu trennen, aufweist, wobei sich die erste und die zweite Abtriebswelle (7, 8) im Wesentlichen parallel miteinander in Radialrichtung innerhalb des Antriebselements (1, 2) erstrecken und die Antriebskraft von dem Antriebselement (1, 2) zu der ersten und der zweiten Abtriebswelle (7, 8) übertragen, in Übereinstimmung mit dem Anpress- oder Trennvorgang durch die Auswahlmittel (9) gegenüber den Antriebskupplungsscheiben (3a, 4a) und den Abtriebskupplungsscheiben (3b, 4b) der ersten und der zweiten Kupplungssektion (3, 4), wobei die erste und die zweite Kupplungssektion (3, 4) parallel mit der ersten und der zweiten Welle (7, 8) angeordnet sind, **dadurch gekennzeichnet, dass:**
sich die Übertragungselemente (5, 6) von beiden Seiten einer Gruppe der ersten und der zweiten Kupplungssektion (3, 4) bis zu der ersten und der zweiten Abtriebswelle (7, 8) erstrecken derart, dass sich die Übertragungselemente (5, 6) von gegenüberliegenden Seiten der ersten und der zweiten Kupplungssektion (3, 4) aus erstrecken, und dass die Auswahlmittel (9) zwischen den Übertragungselementen (5, 6) angeordnet sind.

2. Leistungsübertragungsvorrichtung nach Anspruch 1, wobei Öldurchgänge (10a, 10b) zum Zuführen von Kraftübertragungsöl zu den Auswahlmitteln (9) in Radialrichtung nach innen von den Auswahlmitteln (9) angeordnet sind.

3. Leistungsübertragungsvorrichtung nach Anspruch 1 oder Anspruch 2, wobei die Gruppe der ersten und der zweiten Kupplungssektion (3, 4) wenigstens teilweise zur Atmosphäre hin freigelegt ist, um die Wärmeabstrahlung zu verbessern.

4. Leistungsübertragungsvorrichtung nach einem der Ansprüche 1 bis 3, wobei die Auswahlmittel (9) ein erstes und ein zweites Presselement (12, 13), um die Antriebskupplungsscheiben (3a, 4a) und die Abtriebskupplungsscheiben (3b, 4b) der ersten und der zweiten Kupplungssektion (3, 4) aneinanderzupressen; eine mittige Wand (14) und Druckmittel (17, 18), um das erste und das zweite Presselement (12, 13) zu der mittigen Wand (14) hin zu drücken, umfassen; und wobei die Antriebskupplungsscheiben (3a, 4a) und die Abtriebskupplungsscheiben (3b, 4b) der ersten und der zweiten Kupplungssektion (3, 4) durch axiales Verschieben des ersten und des zweiten Presselements (12, 13) gegen die Druckkraft der Druckmittel (17, 18) aneinandergepresst werden, durch Einleiten von Kraftübertragungsöl in die Räume zwischen der mittigen Wand (14) und dem ersten Presselement (12) oder dem zweiten Presselement (13).

5. Leistungsübertragungsvorrichtung nach Anspruch 4, die ferner ein Führungselement (19) und seitliche Wände (15, 16), die eine Betätigungskammer zum Verschieben des ersten und des zweiten Presselements (12, 13) bilden, umfasst und wobei das erste und das zweite Presselement (12, 13) durch das Führungselement (19) und die Stirnflächen der seitlichen Wände (15, 16) geführt werden.

6. Leistungsübertragungsvorrichtung nach Anspruch 4 oder 5, wobei die Druckmittel (17, 18) eine Blattfeder umfassen.

7. Leistungsübertragungsvorrichtung nach einem der Ansprüche 4 bis 6, wobei jedes der Druckmittel (17, 18) zwischen dem ersten Presselement (12) und der seitlichen Wand (15) und zwischen dem zweiten Presselement (13) und der seitlichen Wand (16) angeordnet ist, um so das erste und das zweite Presselement (12, 13) zu der mittigen Wand (14) hin zu drücken.

8. Leistungsübertragungsvorrichtung nach einem der Ansprüche 1 bis 7, wobei die erste Abtriebswelle (7) und die zweite Abtriebswelle (8) jeweils mit geradzahligen Gängen bzw. ungeradzahligen Gängen eines Getriebes eines Fahrzeugs verbunden sind.

## Revendications

1. Appareil de transmission de puissance comprenant un organe d'entrée (1, 2) mis en rotation par un moteur; une première et une seconde sections d'embrayage (3, 4) comptant respectivement plusieurs disques d'embrayage meneurs (3a, 4a) et plusieurs disques d'embrayage menés (3b, 4b), les disques d'embrayage meneurs et menés (3a, 4a; 3b, 4b) étant disposés de manière alternée; un premier et un second arbres de sortie (7, 8) mis en rotation par une force d'entraînement transmise par la première et la seconde sections d'embrayage (3, 4); des organes de transmission (5, 6) pour transmettre la force d'entraînement de la première et de la seconde sections d'embrayage (3, 4), respectivement au premier et au second arbres de sortie (7, 8); et des moyens de sélection (9) pour sélectivement presser ou séparer entre eux les disques d'embrayage meneurs (3a, 4a) et les disques d'embrayage menés (3b, 4b), respectivement de la première et de la seconde sections d'embrayage (3, 4); le premier et le second arbres de sortie (7, 8) s'étendant en substance parallèlement l'un à l'autre radialement à l'intérieur de l'organe d'entrée (1, 2), et transmettant sélectivement le force d'entraînement de l'organe d'entrée (1, 2) au premier et au second arbres de sortie (7, 8) en fonction de l'action de pressage ou de séparation du moyen de sélection (9) sur les disques d'embrayage meneurs (3a, 4a) et les disques d'embrayage menés (3b, 4b) de la première et de la seconde sections d'embrayage (3, 4), dans lequel la première et la seconde sections d'embrayage (3, 4) sont agencées axialement, parallèlement au premier et au second arbres (7, 8), **caractérisé en ce que** les organes de transmission (5, 6) s'étendent depuis l'un ou l'autre côté d'un groupe des première et seconde sections d'embrayage (3, 4) jusqu'aux premier et second arbres de sortie (7, 8), de telle sorte que lesdits organes de transmission (5, 6) s'étendent depuis des côtés opposés des première et seconde sections d'embrayage (3, 4), et **en ce que** le moyen de sélection (9) est agencé entre les organes de transmission (5, 6).

2. Appareil de transmission de puissance selon la revendication 1, dans lequel des passages pour huile (10a, 10b), destinés à alimenter en huile d'actionnement le moyen de sélection (9) sont agencés radialement vers l'intérieur par rapport audit moyen de sélection (9).

3. Appareil de transmission de puissance selon la revendication 1 ou la revendication 2, dans lequel le groupe de la première et de la seconde sections d'embrayage (3, 4) est au moins partiellement ouvert sur l'atmosphère, pour améliorer le rayonnement calorifique.

4. Appareil de transmission de puissance selon l'une quelconque des revendications 1-3, dans lequel le moyen de sélection (9) comprend un premier et un second organes presseurs (12, 13), pour presser entre eux les disques d'embrayage meneurs (3a, 4a) et les disques d'embrayage menés (3b, 4b), de la première et de la seconde sections d'embrayage (3, 4); une paroi centrale (14); et un moyen de sollicitation (17, 18), pour solliciter le premier et le second organes presseurs (12, 13) en direction de la paroi centrale (14); et dans lequel les disques d'embrayage meneurs (3a, 4a) et les disques d'embrayage menés (3b, 4b) de la première et de la seconde sections d'embrayage (3, 4) sont pressés les uns contre les autres en faisant coulisser axialement le premier et le second organes presseurs (12, 13) à l'encontre de la force de sollicitation du moyen de sollicitation (17, 18) avec introduction d'huile d'actionnement dans des espaces entre la paroi centrale (14) et le premier organe presseur (12) ou le second organe presseur (13).

5. Appareil de transmission de puissance selon la revendication 4, comprenant de plus un organe de guidage (19) et des parois latérales (15, 16) formant une chambre d'actionnement pour le coulissement du premier et du second organes presseurs (12, 13); et dans lequel le premier et le second organes presseurs (12, 13) sont guidés par l'organe de guidage (19) et des faces d'extrémité des parois latérales (15, 16).

6. Appareil de transmission de puissance selon la revendication 4 ou 5, dans lequel le moyen de sollicitation (17, 18) comprend un ressort à lame.

7. Appareil de transmission de puissance selon l'une quelconque des revendications 4-6, dans lequel chacun des moyens de sollicitation (17, 18) est agencé entre le premier organe presseur (12) et la paroi latérale (15), et entre le second organe presseur (13) et la paroi latérale (16), de façon à solliciter le premier et le second organes presseurs (12, 13) en direction de la paroi centrale (14).

8. Appareil de transmission de puissance selon l'une quelconque des revendications 1-7, dans lequel le premier arbre de sortie (7) et le second arbre de sortie (8) sont connectés respectivement aux rapports pairs et aux rapports impairs d'une transmission d'un véhicule.
